# EUROPEAN PATENT APPLICATION

(11) **EP 2 204 690 A1**
(43) Date of publication of application: **07.07.2010**
(21) Application number: 09015444.4
(22) Date of filing: 14.12.2009
(51) Int. Cl.: G02F 1/13357, G02B 6/00, G02F 1/1334

(54) **Illuminating device and display device**

(30) Priority: 05.01.2009 JP 2009000307
(71) Applicant: Sony Corporation, Tokyo 108-0075 (JP)
(72) Inventor: Okuyama, Kentaro, Minato-ku Tokyo 108-0075 (JP)
(74) Representative: Müller - Hoffmann & Partner

(57) **Abstract**

An illuminating device includes a light guide plate, a light source disposed on a side face of the light guide plate, and a light modulation element disposed on the surface or on the inside of the light guide plate and joined to the light guide plate. The light modulation element has a pair of transparent substrates disposed apart from each other and opposed to each other, an electrode capable of generating an electric field in a direction parallel to the surface of the transparent substrates, and a light modulation layer provided in a gap between the pair of transparent substrates, and including a first region and a second region whose response speeds to the electric field are different from each other, and at least one of the first region and the second region has optical anisotropy.

## Description

### BACKGROUND OF THE INVENTION

### Field of the Invention

The present invention relates to an illuminating device having a light modulation element exhibiting scattering property or transparency to light and a display device.

### Description of the Related Art

In recent years, the picture quality and energy saving of a liquid crystal display have been being quickly progressed, and a method realizing improvement in dark-place contract by partially modulating intensity of light of a backlight has been proposed. In the method, mainly, light of the backlight is modulated in accordance with a display image by partially driving a light emitting diode (LED) used as a light source of the backlight. For a large-sized liquid crystal display, like for a small-sized liquid crystal display, demand for reduction in thickness is increasing. Attention is paid not to a method of disposing a cold cathode fluorescent lamp (CCFL) or an LED just below a liquid crystal panel but to an edge light method of disposing a light source at an edge of a light guide plate. In the edge light method, however, it is difficult to perform partial driving of partially modulating light intensity of a light source.

### SUMMARY OF THE INVENTION

As a technique of extracting light propagating in a light guide plate, for example, in Japanese Unexamined Patent Application Publication No. H06-347790, a display device using a polymer dispersed liquid crystal (PDLC) for switching between a transparent state and a scattering state is proposed. It is a technique directed to prevent reflection and the like and of switching between the transparent state and the scattering state by partially applying a voltage to the PDLC. In the method, in the case where the PDLC is in a transparent state in the front direction (the direction normal to the PDLC), a part of light obliquely propagating in the light guide plate is scattered by the refractive index difference between a liquid crystal material and a polymer material. Consequently, light leaks in a range where the view angle is large, and the view angle characteristic deteriorates. To improve the view angle characteristic, for example, light leaked in the oblique direction is absorbed by a polarizer as described in Japanese Patent No. 3,479,493.

In the method, however, light leaked in the oblique direction is absorbed by the polarizer, and there is a shortcoming such that display becomes dark.

It is therefore desirable to provide an illuminating device and a display device realizing improved display luminance while reducing leakage of light in a range where the view angle is large.

According to an embodiment of the present invention, there is provided a first illuminating device including: a light guide plate; a light source disposed on a side face of the light guide plate; and a light modulation element disposed on the surface or on the inside of the light guide plate and joined to the light guide plate. The light modulation element has a pair of transparent substrates disposed apart from each other and opposed to each other; an electrode capable of generating an electric field in a direction parallel to the surface of the transparent substrates; and a light modulation layer provided in a gap between the pair of transparent substrates. The light modulation layer includes a first region and a second region whose response speeds to the electric field are different from each other, and at least one of which has optical anisotropy.

According to an embodiment of the present invention, there is provided a display device including: a display panel having a plurality of pixels disposed in a matrix, the plurality of pixels being driven on the basis of an image signal; and an illuminating device that illuminates the display panel. The illuminating device provided in the display device has the same components as those of the above-mentioned illuminating device.

Each of the first illuminating device and the display device of the embodiment of the present invention is provided with, in the light modulation element joined to the light guide plate: a light modulation layer including first and second regions whose response speeds to the electric field are different from each other and at least one of which has optical anisotropy; and an electrode capable of generating an electric field in a direction parallel to the surface of the transparent substrates. For example, it is assumed that the first region exhibits optical anisotropy when voltage is applied to the electrode, and exhibits optical isotropy when no voltage is applied to the electrode. The second region exhibits optical isotropy regardless of the presence/absence of application of voltage to the electrode. In this case, for example, when the extraordinary light refractive index of the first region and the refractive index of the second region are made close to each other and the orientation of the optical axis of the first region is made parallel to, or almost parallel to the surface of the transparent substrate by electric field control, the refractive index difference in the oblique direction is reduced. In the present invention, since the light source is disposed on a side face of the light guide plate, light emitted from the light source and propagating in the light guide plate contains many components in the oblique direction. Therefore, in the above-described case, high transparency is obtained with respect to light propagating in the light guide plate.

It is now assumed that, for example, both of the first and second regions exhibit optical anisotropy regardless of the presence/absence of application of voltage to the electrode. In this case, the orientations of the first and second regions are made coincide with each other or different from each other by the electric field control. For example, when the ordinary light refractive indices of the first and the second regions are made close to each other, the extraordinary light refractive indices thereof are also made close to each other, and the orientations of the optical axes of the first and second regions are made coincide with each other by the electric field control and alignment films, the refractive index difference in all of the directions including the front direction and oblique direction is reduced. Therefore, in this case, extremely high transparence is obtained with respect to light propagating in the light guide plate. For example, when the ordinary light refractive indices thereof are made equal to each other, the extraordinary light refractive indices thereof are also made equal to each other, and the orientations of the optical axes of the first and second regions are made coincide with each other by the electric field control and alignment films, the refractive index difference in all of the directions including the front direction and the oblique direction is almost eliminated. Therefore, in this case, highest transparency is obtained with respect to light propagating in the light guide plate.

According to an embodiment of the present invention, there is provided a second illuminating device including: a light guide plate; a light source disposed on a side face of the light guide plate; and a light modulation element disposed on the surface or on the inside of the light guide plate and joined to the light guide plate. The light modulation element has a pair of transparent substrates disposed apart from each other and opposed to each other; an electrode capable of generating an electric field in a direction parallel to the surface of the transparent substrates; and a light modulation layer provided in a gap between the pair of transparent substrates. The light modulation layer includes a plurality of regions whose response speeds to the electric field are different from each other. Each of the regions exhibits scattering or transparency to light from the light source in correspondence with the presence/absence of application of voltage to the electrode.

In the second illuminating device of the embodiment of the invention, in the light modulation element joined to the light guide plate, a light modulation layer including a plurality of regions whose response speeds to the electric field are different from each other, and an electrode capable of generating an electric field in a direction parallel to the surface of the transparent substrates. Further, the light modulation layer exhibits scattering or transparency to light from the light source in correspondence with the presence/absence of application of voltage to the electrode. It may be said that the reason why the light modulation layer becomes transparent to light from the light source by the electric field control is because at least the refractive index difference in an oblique direction is reduced in the following three cases.

### Case 1

A region in the light modulation layer exhibits optical anisotropy when voltage is applied to the electrode and exhibits optical isotropy when no voltage is applied to the electrode. Another region in the light modulation layer exhibits optical isotropy regardless of the presence/absence of application of voltage to the electrode. The ordinary refractive index of the first region and the refractive index of the second region are close to each other. By the electric field control, the orientation of the optical axis of the first region is made parallel to, or almost parallel to the surface of the transparent substrate, and the refractive index difference in the oblique direction is reduced.

### Case 2

Both of the first and second regions exhibits optical anisotropy regardless of the presence/absence of application of voltage to the electrode. By the electric field control and the alignment film, the orientations of the optical axes of the first and second regions may be made coincide with each other or cross each other. The ordinary light refractive indices of both thereof are close to each other, and extraordinary light refractive indices of both thereof are also close to each other. By the electric field control and the alignment film, the orientations of the optical axes of the first and second regions are made coincide with each other, and the refractive index difference in all of directions including the front direction and oblique direction is reduced.

### Case 3

Both of the first and second regions exhibit optical anisotropy regardless of the presence/absence of application of voltage to the electrode. By the electric field control and the alignment film, the orientations of the optical axes of the first and second regions may be made coincide with each other or cross each other. The ordinary light refractive indices of both thereof are equal to each other, and extraordinary light refractive indices of both thereof are also equal to each other. By the electric field control and the alignment film, the orientations of the optical axes of the first and second regions are made coincide with each other, and the refractive index difference in all of directions including the front direction and oblique direction is almost eliminated.

In the first illuminating device and the display device of the embodiment of the present invention, in the light modulation element joined to the light guide plate, a light modulation layer including first and second regions whose response speeds to the electric field are different from each other and at least one of which has optical anisotropy, and an electrode capable of generating an electric field in a direction parallel to the surface of the transparent substrates are provided. With the arrangement, at least the refractive index difference in an oblique direction is reduced, so that high transparency is obtained with respect to light from the light source. As a result, in a dark state, leakage of light in the range where the view angle is large is reduced or almost eliminated. The luminance in an area in a partial light state is increased by the decreased light leakage amount. Therefore, in the embodiment of the present invention, while reducing or almost eliminating leakage of light in the range where the view angle is large, display luminance is improved.

In the second illuminating device of the embodiment of the present invention, in the light modulation element joined to the light guide plate, a light modulation layer including a plurality of regions whose response speeds to the electric field are different from each other, and an electrode capable of generating an electric field in a direction parallel to the surface of the transparent substrates are provided. Further, the light modulation layer exhibits scattering or transparency to light from the light source in correspondence with the presence/absence of application of voltage to the electrode. With the arrangement, at least the refractive index difference in an oblique direction is reduced, so that high transparency is obtained with respect to light from the light source. As a result, in a dark state, leakage of light in the range where the view angle is large is reduced or almost eliminated. The luminance in an area in a partial light state is increased by the decreased light leakage amount. Therefore, in the embodiment of the present invention, while reducing or almost eliminating leakage of light in the range where the view angle is large, display luminance is improved.

Other and further objects, features and advantages of the invention will appear more fully from the following description.

### BRIEF DESCRIPTION OF THE DRAWINGS

FIG. 1 is a cross sections illustrating an example of a configuration of a backlight according to a first embodiment of the present invention.

FIGs. 2A and 2B are diagrams illustrating an example of a configuration of a light modulating element and a bottom electrode in FIG. 1.

FIG. 3 is a perspective view illustrating another example of the configuration of the bottom electrode.

FIG. 4 is a cross section illustrating another example of the configuration of the backlight of FIG. 1.

FIGs. 5A to 5C are schematic diagrams for explaining an example of action of a light modulating element in FIG. 1.

FIGs. 6A to 6C are schematic diagrams for explaining another example of action of the light modulating element in FIG. 1.

FIG. 7 is a schematic diagram for explaining action of the backlight of FIG. 1.

FIGs. 8A to 8D are cross sections for explaining processes of manufacturing the backlight of FIG. 1.

FIGs. 9A to 9D are cross sections for explaining manufacturing processes subsequent to FIG. 8D.

FIG. 10 is a cross section illustrating another example of the configuration of the backlight of FIG. 1.

FIG. 11 is a cross section illustrating still another example of the configuration of the backlight of FIG. 1.

FIG. 12 is a cross section illustrating further another example of the configuration of the backlight of FIG. 1.

FIG. 13 is a cross section illustrating another example of the configuration of the light modulating element in FIG. 1.

FIG. 14 is a cross section illustrating an example of the configuration of a backlight according to a second embodiment of the present invention.

FIG. 15 is a cross section illustrating an example of the configuration of a light modulating element in FIG. 14.

FIGs. 16A to 16C are schematic diagrams for explaining an example of the action of the light modulating element in FIG. 15.

FIGs. 17A to 17C are schematic diagrams for explaining another example of the action of the light modulating element in FIG. 15.

FIG. 18 is a cross section illustrating another example of the configuration of the light modulating element in FIG. 15.

FIG. 19 is a cross section illustrating still another example of the configuration of the light modulating element in FIG. 1.

FIGs. 20A and 20B are cross sections illustrating further another example of the configuration of the light modulating element in FIG. 1.

FIG. 21 is a cross section illustrating an example of a display device according to an application example.

### DETAILED DESCRIPTION OF THE PREFERRED EMBODIMENTS

Best modes for carrying out the present invention will be described in detail below with reference to the drawings. Description will be given in the following order.
1. First embodiment (backlight, normally white PDLC)
2. Modification (position of a light modulating element, and electrode)
3. Second embodiment (backlight, inversion PDLC)
4. Modification (position of a light modulating element, and electrode)
5. Application example (display device)

### First Embodiment

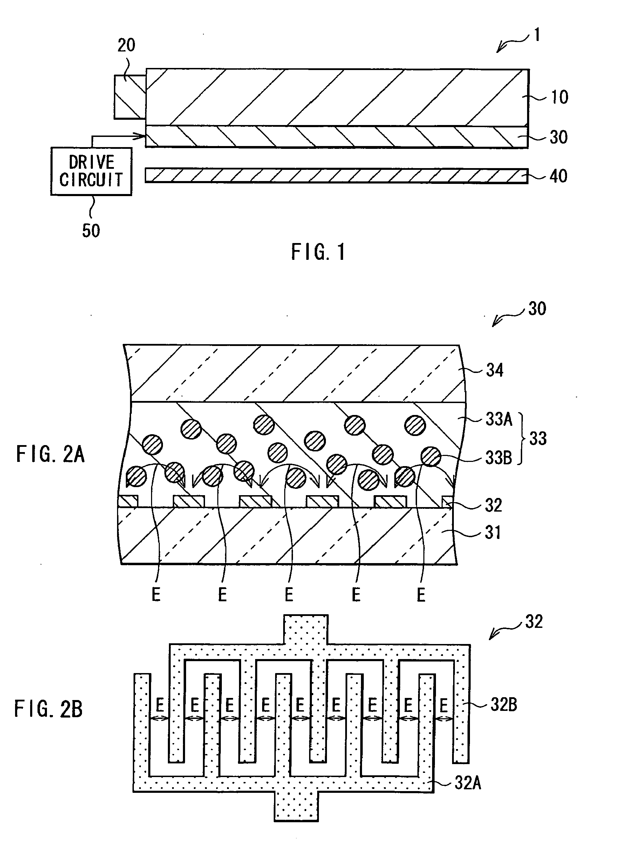

FIG. 1 illustrates an example of a sectional configuration of a backlight 1 (illuminating device) according to a first embodiment of the present invention. FIG. 2A illustrates an example of a sectional configuration of a light modulating element 30 (which will be described later) provided in the backlight 1 of FIG. 1. FIG. 2B illustrates an example of a plane configuration of a bottom electrode (which will be described later) of FIG. 2A. FIGs. 1, 2A and 2B are schematic diagrams, and dimensions and shapes in the diagrams are not always the same as actual dimensions and shapes.

The backlight 1 illuminates, for example, a liquid crystal display panel or the like from the back, and has a light guide plate 10, a light source 20 disposed on a side face of the light guide plate 10, a light modulation element 30 and a reflector 40 disposed on the backside of the light guide plate 10, and a drive circuit 50 for driving the light modulation element 30.

The light guide plate 10 guides light from the light source 20 disposed on the side face of the light guide plate 10 to the top face of the light guide plate 10. The light guide plate 10 has a shape corresponding to a display panel (not illustrated) disposed on the top face of the light guide plate 10, for example, a rectangular parallelepiped surrounded by a top face, a bottom face, and side faces. The light guide plate 10 has a shape in which, for example, a predetermined pattern is formed in at least one of the top face and the bottom face, and has the function of scattering and uniformizing light entering from the side face. The light guide plate 10 also functions, for example, as a supporting member for supporting an optical sheet (for example, a diffusion plate, a diffusion sheet, a lens film, a polarization separation sheet, or the like) disposed between the display panel and the backlight 1. The light guide plate 10 mainly contains, for example, a transparent thermoplastic resin such as polycarbonate resin (PC), acrylic resin (polymethylmethacrylate (PMMA)), or the like.

The light source 20 is a linear light source and is, for example, a hot cathode fluorescent lamp (HCFL), a CCFL, a plurality of LEDs disposed in a line, or the like. The light source 20 may be provided on only one side face of the light guide plate 10 as illustrated in FIG. 1 or provided on two opposed side faces in the light guide plate 10 although not illustrated.

The reflector 40 returns light leaked from the back of the light guide plate 10 via the light modulation element 30 toward the light guide plate 10 side and, for example, has the functions of reflection, diffusion, scattering, and the like. With the reflector 40, emission light from the light source 20 is efficiently used, and the front luminance is also improved. The reflector 40 is made by, for example, foamed polyethylene terephthalate (PET), silver-deposited film, a multilayer reflection film, white PET, or the like.

In the embodiment, the light modulation element 30 is closely attached to the back (under face) of the light guide plate 10 without an air layer. It is closely attached to the back of the light guide plate 10 via, for example, an adhesive (not illustrated). In the light modulation element 30, for example, as illustrated in FIG. 2A, a transparent substrate 31, a bottom electrode 32, a light modulation layer 33, and a transparent substrate 34 are disposed in order from the reflector 40 side.

The transparent substrates 31 and 34 support mainly the light modulation layer 33 and are generally substrates which are transparent to visible light, such as glass plates or plastic films. The bottom electrode 32 is provided on the surface of the transparent substrate 31, facing the transparent substrate 34. The bottom electrode 32 generates an electric field in a direction parallel to the surface of the transparent substrate 31. Electric fields E generated by the bottom electrodes 32 include components parallel to the optical axis of the light source 20.

For example, as illustrated in FIG. 2B, the bottom electrode 32 has a comb-shaped electrode 32A (first electrode) having comb teeth extending in a direction crossing the optical axis of the light source 20, and a comb-shaped electrode 32B (second electrode) having comb teeth disposed alternately with the comb teeth of the comb-shaped electrode 32A. The comb-shaped electrodes 32A and 32B are formed, for example, in the same plane on the transparent substrate 31. Preferably, the comb-teeth of the comb-shaped electrode 32A and those of the comb-shaped electrode 32B are parallel to each other and are orthogonal to the optical axis of the light source 20.

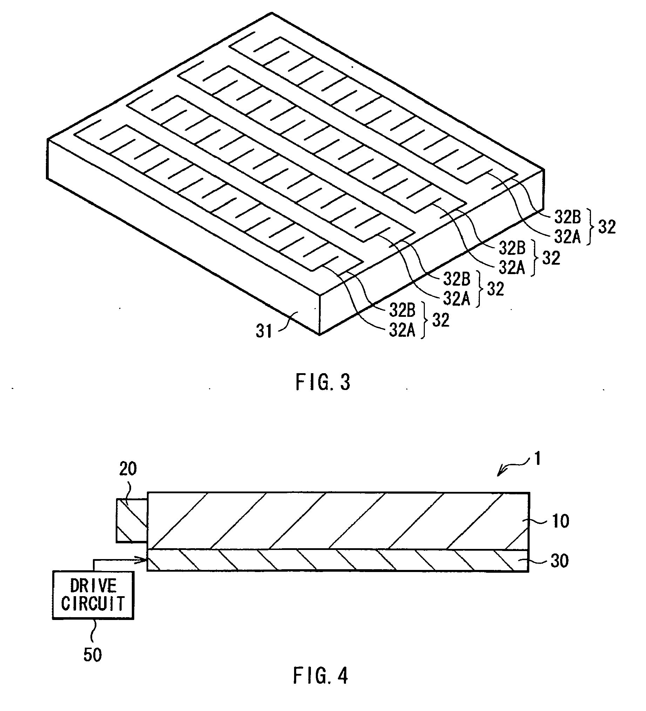

Only one set of the comb-shaped electrodes 32A and 32B may be provided as illustrated in FIG. 2B, or a plurality of sets may be provided as illustrated in FIG. 3. In the case where a plurality of sets of the comb-shaped electrodes 32A and 32B are provided, it is possible to be driven independently of each other, so that the light modulation element 30 may be partly driven. In the light modulation layer 33, a region opposed to a set of comb-shaped electrodes 32A and 32B exhibits transparency or scattering property to light from the light source 20 in accordance with the magnitude of a voltage applied to the comb-shaped electrodes 32A and 32B. The transparency and scattering property will be described in detail at the time of explaining the light modulation layer 33.

The bottom electrode 32 is made of, for example, a transparent conductive material such as indium tin oxide (ITO) or an opaque conductive material such as a metal. In the case where the bottom electrode 32 is made of a metal, like the reflector 40, the bottom electrode 32 also has the function of reflecting light entering the light modulation element 30 from the back of the light guide plate 10. Therefore, in this case, for example, the reflector 40 may not be provided as illustrated in FIG. 4.

The light modulation layer 33 has, for example, as illustrated in FIG. 2A, a plurality of regions whose optical characteristics at a predetermined electric field intensity are different from each other (a bulk 33A (second region) and microparticles 33B (first region)). For example, as illustrated in FIG. 2A, the bulk 33A is formed so as to bury the surrounding of the microparticles 33B, and the microparticles 33B are disposed so as to be dispersed in the bulk 33A when seen from the top and from sides of the light modulation layer 33. The response speed to the electric field of the microparticles 33B is higher than that of the bulk 33A.

The bulk 33A is formed by curing an isotropic low-molecular material and is formed by a high-molecular material exhibiting the isotropic property to light from the light source 20. In the case of providing an alignment film in the light modulation element 30, it is preferable to use, as the isotropic low-molecular material, an ultraviolet curable resin or thermoset resin exhibiting no alignment to the alignment film. The bulk 33A has, for example, a streaky structure or a porous structure which does not respond to an electric field. On the other hand, the microparticle 33B contains, for example, mainly a liquid crystal material, exhibits alignment when an electric field having a predetermined intensity is applied, and exhibits isotropy when no electric field is applied. That is, the microparticle 33B expresses optical anisotropy at the time of alignment different from the bulk 33A.

The optical characteristics of the bulk 33A and the microparticle 33B will be described in detail below.

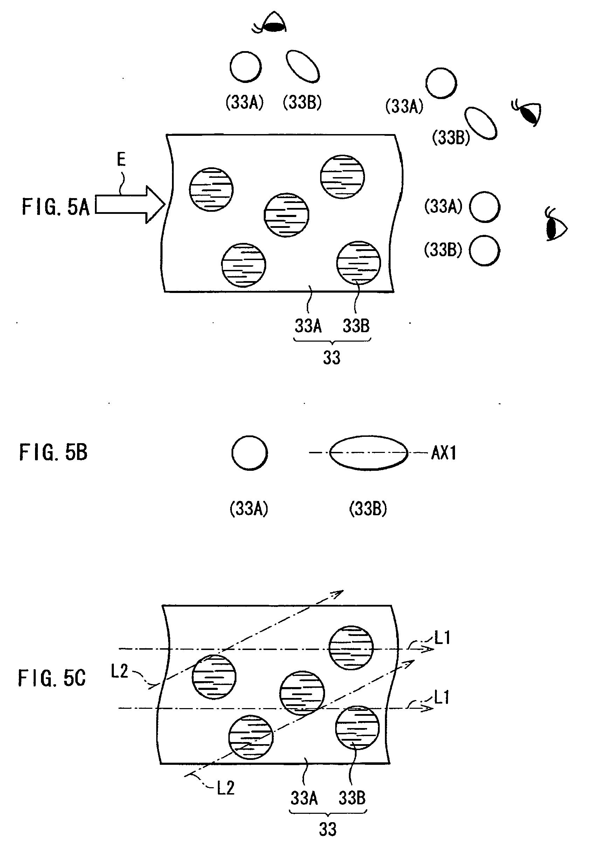

FIG. 5A schematically illustrates an example of an orientation state in the microparticles 33B when a predetermined voltage is applied across the comb-shaped electrodes 32A and 32B. The bulk 33A expresses isotropy and is not aligned. FIG. 5B illustrates an example of refractive index ellipsoidal bodies of the bulk 33A and the microparticle 33B when a predetermined voltage is applied across the comb-shaped electrodes 32A and 32B. The refractive index ellipsoidal body is obtained by expressing the refractive indices of linearly polarized light entering from various directions by a tensor ellipsoid. By seeing a section of an ellipsoidal body from a light incident direction, the refractive index is known geometrically. FIG. 5C schematically illustrates an example of a state where light L1 traveling in a lateral direction and light L2 traveling in an oblique direction passes through the light modulation layer 33 when a voltage is applied across the comb-shaped electrodes 32A and 32B.

The lateral direction refers to a direction parallel to the surface of the transparent substrate 31. The oblique direction refers to a direction of incidence on the surface of the transparent substrate 31 at a predetermined angle (for example, the total reflection critical angle of the light guide plate 10) or larger. For example, in the case where the light guide plate 10 is made of acrylic having a refractive index of 1.5 and the surface on the light outgoing side of the light guide plate 10 is in contact with air having a refractive index of 1.0, the total reflection critical angle becomes 41.8 degrees. In this case, the oblique direction refers to a direction of incidence on the surface of the transparent substrate 31 at an angle of 41.8 degrees or larger.

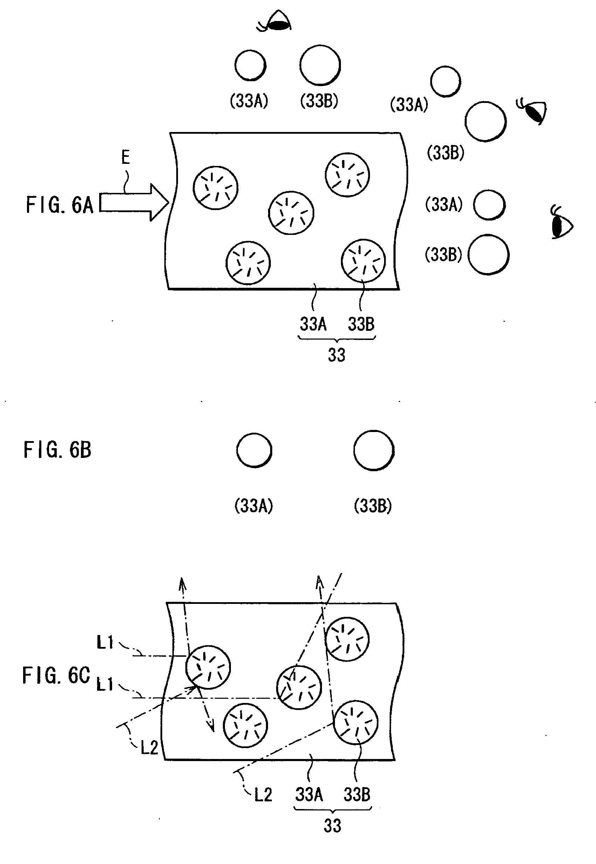

FIG. 6A schematically illustrates an example of an orientation state in the microparticle 33B when no voltage is applied across the comb-shaped electrodes 32A and 32B. In this case as well, the bulk 33A expresses isotropy and is not aligned. FIG. 6B illustrates an example of refractive index ellipsoidal bodies of the bulk 33A and the microparticle 33B when no voltage is applied across the comb-shaped electrodes 32A and 32B. FIG. 6C schematically illustrates an example of a state where light L1 traveling in a lateral direction and light L2 traveling in an oblique direction is scattered in the light modulation layer 33 when no voltage is applied across the comb-shaped electrodes 32A and 32B.

When a predetermined voltage is applied across the comb-shaped electrodes 32A and 32B, for example, as illustrated in FIGs. 5A and 5B, an optical axis AX1 of the microparticle 33B is parallel, or almost parallel to a plane (hereinbelow, called a reference plane) parallel to the surface of the transparent substrates 31 and 34. The optical axis refers to a line parallel to a travel direction of light in which the refractive index has one value regardless of the polarization direction.

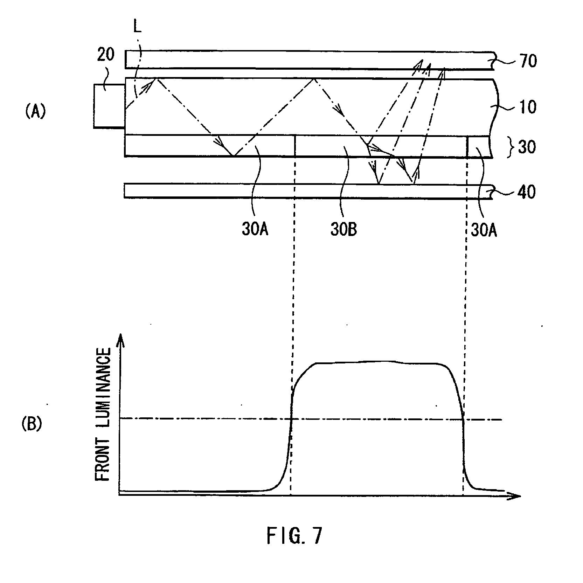

Preferably, the refractive index of the bulk 33A and the refractive index of ordinary light of the microparticle 33B are equal to each other. In this case, for example, when a predetermined voltage is applied across the comb-shaped electrodes 32A and 32B, as illustrated in FIG. 5B, the refractive index difference becomes small in the oblique direction and the lateral direction. Since the light source 20 is disposed on a side face of the light guide plate 10 in the embodiment, light emitted from the light source 20 and propagating in the light guide plate 10 contains a number of components in the oblique direction. Therefore, in the above-described case, high transparency is obtained with respect to light propagating in the light guide plate 10. For example, as illustrated in FIG. 5C, the light L1 traveling in the lateral direction and light L2 traveling in the oblique direction is hardly scattered in the light modulation layer 33 and passes through the light modulation layer 33. As a result, for example, as illustrated in FIG. 7, light L from the light source 20(light from an oblique direction) is totally reflected by an interface of a transparent region 30A (an interface between the transparent substrate 31 or the light guide plate 10 and air), and luminance of the transparent region 30A (luminance in black display) becomes lower than that in the case where the light modulation element 30 is not provided (alternate long and short dash line in (B) in FIG. 7).

On the other hand, when no voltage is applied across the comb-shaped electrodes 32A and 32B, for example, as illustrated in FIG. 6A, the microparticles 33B are oriented at random. Therefore, in this case, for example, as illustrated in FIG. 6A and 6B, the refractive index difference is large in all of directions including the oblique direction and the lateral direction, and high scattering performance is obtained. For example, as illustrated in FIG. 6C, the light L1 travelling in the lateral direction and the light L2 travelling in the oblique direction is scattered in the light modulation layer 33 and passes through the light modulation layer 33. As a result, for example, as illustrated in FIG. 7, the light L from the light source 20 (light from the oblique direction) is totally reflected by the interface of a scattering region 30B (the interface between the transparent substrate 31 or the light guide plate 10 and air). The luminance (luminance in white display) of the scattering region 30B becomes much higher as compared with the case where the light modulation element 30 is not provided (alternate long and short dash line in (B) in FIG. 7). Moreover, luminance in partial white display (luminance raise) increases by an amount of decrease in the luminance of the transparent region 30A.

The refractive index difference (= extraordinary light refractive index - ordinary light refractive index) of the microparticle 33B is preferably as large as possible like 0.05 or larger, more preferably, 0.1 or larger and, further more preferably, 0.15 or larger. In the case where the refractive index difference of the microparticle 33B is large, the scattering performance of the light modulation layer 33 is high, the light guide condition is easily made unsatisfied, and light from the light guide plate 10 is easily extracted.

The drive circuit 50 controls the magnitude of a voltage applied to the comb-shaped electrodes 32A and 32B. The drive circuit 50, for example, applies a high voltage to the comb-shaped electrode 32A and applies a low voltage to the comb-shaped electrode 32B, thereby generating an electric field E in the lateral direction having a magnitude corresponding to the magnitudes of the voltages applied to the comb-shaped electrodes 32A and 32B in the light modulation layer 33. In the case where a plurality of sets of comb-shaped electrodes 32A and 32B are provided and voltages may be applied separately to the comb-shaped electrodes 32A and 32B in each of the sets, for example, electric fields E whose magnitudes are different from each other may be generated from the comb-shaped electrodes 32A and 32B in each of the sets.

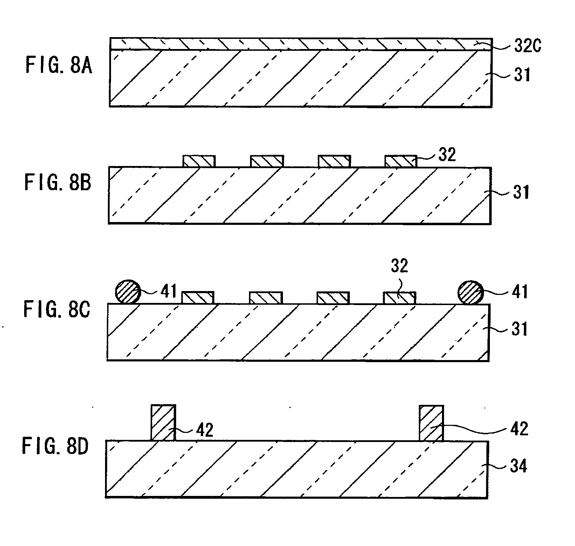

A method of manufacturing the backlight 1 of the embodiment will be described below with reference to FIGs. 8A to 8D to FIGs. 9A to 9D.

First, a transparent conductive film 32C made of ITO or the like is formed on the transparent substrate 31 which is a glass substrate or plastic film substrate (FIG. 8A). Next, a resist layer is formed on the entire surface and, after that, an electrode pattern having a comb shape is formed in the resist layer by patterning. Subsequently, by selectively etching the transparent conductive film 32C using the resist layer as a mask, the bottom electrode 32 is formed (FIG. 8B). As a method of patterning, preferably, photolithography, a laser abrasion method, or the like is used.

Spacers 41 for forming cell gaps are sprayed by a dry or wet method on the surface including the bottom electrodes 32 (FIG. 8C). In place of the spacer 41, columnar spacers may be formed by photolithography.

Subsequently, a seal agent pattern 42 for adhesion and preventing leakage of the liquid crystal is applied, for example, in a frame shape on the surface of the transparent substrate 34 (FIG. 8D). The seal agent pattern 42 may be formed by the dispenser method or screen printing method.

The vacuum joining method (one drop fill method (ODF method)) will be described below. The light modulation element 30 may be also generated by the vacuum injection method or the like.

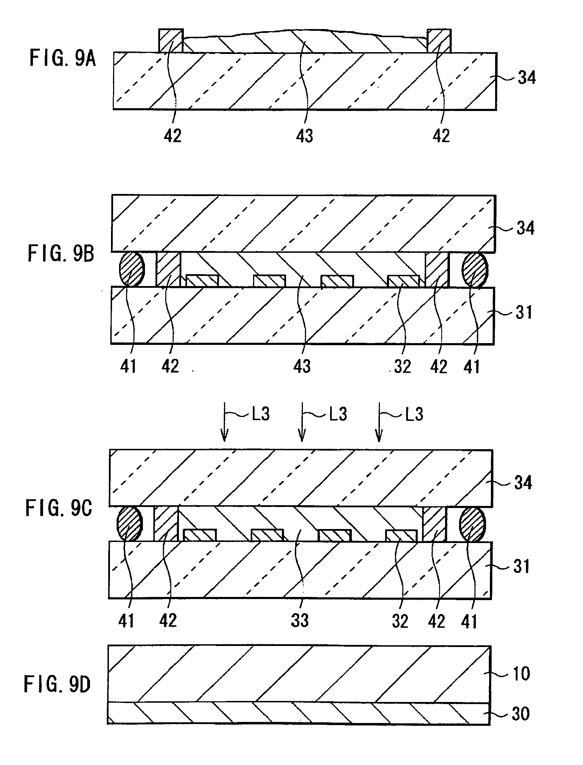

First, a mixture 43 of a liquid crystal material and a polymerized material is dropped uniformly to the surface of the transparent substrate 34 (FIG. 9A). It is preferable to drop the mixture 43 by using a precise dispenser of a linear guide type. A die coater or the like may be employed using the seal agent pattern 42 as a bank. As the liquid crystal material and the polymerization material, the above-described material is used.

To the mixture 43, other than the liquid crystal material and the polymerization material, a polymerization initiator is added. According to the ultraviolet wavelength used, the monomer ratio of the polymerization initiator to be added is adjusted in the range of 0.1 to 10% by weight both inclusive. In the mixture 43, in addition, a polymerization inhibitor, a plasticizer, a viscosity modifier, or the like may be added as necessary. In the case where the polymerized material is a solid or gel at a room temperature, it is preferable to warm a cap, a syringe, and a substrate.

The transparent substrates 31 and 34 are disposed in a vacuum joining machine (not illustrated). After that, evacuation is performed and the transparent substrates 31 and 34 are joined (FIG. 9B). The resultant is released to the atmosphere to uniformize the cell gaps by uniform pressurization of atmospheric pressure. The cell gap may be properly selected on the basis of the relation between white luminance (the degree of whiteness) and the drive voltage and is 5 to 40 µm both inclusive, preferably, 6 to 20 µm both inclusive, and more preferably, 7 to 10 µm both inclusive. Subsequently, by irradiating a monomer with an ultraviolet ray L3 to polymerize it, the light modulation layer 33 is formed (FIG. 9C). In such a manner, the light modulation element 30 is manufactured.

While ultraviolet rays are irradiated, preferably, the temperature of the mixture 43 is prevented from being changed. It is preferable to use an infrared cut filter or use an UV-LED or the like as the light source. The ultraviolet illumination exerts an influence on the organization structure of a composite material, so that it is preferable to properly adjust the ultraviolet illumination from the liquid crystal material and the monomer material used or the composition of the liquid crystal material and the monomer material. The range of 0.1 to 500 mW/cm² both inclusive is preferable and the range of 0.5 to 30 mW/cm² both inclusive is more preferable. There is a tendency that the lower the ultraviolet illumination is, the lower the drive voltage becomes. Preferable ultraviolet illumination may be selected in consideration of both of productivity and characteristics.

The light modulation element 30 is joined to the light guide plate 10 (FIG. 9D). It may be carried by adhesion or bonding. Preferably, the light modulation element 30 is adhered or bonded with a material having a refractive index which is close to the refractive index of the light guide plate 10 and the refractive index of the substrate material of the light modulation element 30 as much as possible. Finally, a lead line (not illustrate) is attached to the bottom electrode 32. In such a manner, the backlight 1 of the embodiment is manufactured.

The process of forming the light modulation element 30 and, finally, joining the light modulation element 30 to the light guide plate 10 has been described. It is also possible to preliminarily join the transparent substrate 34 to the surface of the light guide plate 10 and form the backlight 1. The backlight 1 may be formed by any of a sheet method and a roll-to-roll method.

The action and the effect of the backlight 1 of the embodiment will now be described.

In the backlight 1 of the embodiment, light from the light source 20 enters the light guide plate 10, is reflected by the top face of the light guide plate 10 and the under face of the transparent region 30A in the light modulation element 30, and propagates in the light guide plate 10 and the light modulation element 30 (refer to FIG. 7A). The light propagating in the light guide plate 10 and the light modulation element 30 is scattered in the scatter region 30B in the light modulation element 30. The light passed through the under face of the scattering region 30B in the scattered light is reflected by the reflector 40, returned again to the light guide plate 10, and is emitted from the top face of the backlight 1. The light traveling toward the top face of the scatter region 30B in the scattered light passes through the light guide plate 10 and is emitted from the top face of the backlight 1. As described above, in the embodiment, light from the top face of the transparent region 30A is hardly emitted, but light is emitted from the top face of the scattering region 30B. In such a manner, the modulation ratio in the front direction is increased.

Generally, the PDLC is formed by mixing the liquid crystal material and an isotropic low-polymer material and causing phase separation by ultraviolet irradiation, drying of a solvent, or the like, and is a composite layer in which microparticles of the liquid crystal material are dispersed in a high-polymer material. The liquid crystal material in the composite layer is oriented in random directions when no voltage is applied and it shows the scattering property. When voltage is applied, the liquid crystal material is oriented in the electric field direction. Consequently, in the case where the ordinary light refractive index of the liquid crystal material and that of the high-polymer material are equal to each other and an electric field is applied in the front direction, high transparency is exhibited in the front direction (the normal direction of the PDLC). In this case, however, in an oblique direction, the difference between the extraordinary light refractive index of the liquid crystal material and that of the high-polymer material becomes conspicuous. Even if the transparency is exhibited in the front direction, the scattering appears in the oblique direction.

Usually, the light modulation element using the PDLC has often a structure obtained by sandwiching PDLC between two glass plates on each of which a transparent conductive film is formed on the surface. In the case where light is obliquely entered from the air onto the light modulation element having the above-described structure, the light entered from the oblique direction is refracted by the refractive index difference between air and the glass plate, and is entered on the PDLC at a smaller angle. Consequently, in such a light modulation element, large scattering does not occur. For example, in the case where light is entered from the air at an angle of 80°, the incident angle of the light to the PDLC is decreased to about 40° by refraction in the glass interface.

However, in the edge light method using the light guide plate, light is entered through the light guide plate, so that the light crosses the PDLC at a large angle of about 80°. Due to this, the difference between the extraordinary light refractive index of the liquid crystal material and the refractive index of the high-polymer material is large and, further, light crosses the PDLC at a larger angle, so that an optical path subjected to scattering also becomes longer. For example, in the case where the microparticles of the liquid crystal material having an ordinary light refractive index of 1.5 and an extraordinary light refractive index of 1.65 are dispersed in a high-polymer material having a refractive index of 1.5, there is no refractive index difference in the front direction (the normal direction of the PDLC) but is large in the oblique direction. Consequently, the scattering in the oblique direction is difficult to be decreased, so that the view angle characteristic is bad. Further, in the case where an optical film such as a diffusion film is provided on the light guide plate, oblique leak light is diffused also in the front direction by the diffusion film or the like, so that light leakage in the front direction increases, and the modulation ratio in the front direction becomes lower.

On the other hand, in the embodiment, there is provided the light modulation layer 33 including: the microparticles 33B exhibiting optical anisotropy when voltage is applied to the bottom electrode 32 and exhibiting optical isotropy when no voltage is applied to the bottom electrode 32; and the bulk 33A exhibiting optical isotropy regardless of the presence/absence of application of voltage to the bottom electrode 32. By electric field control, the orientation of an optical axis AX1 of the microparticle 33B is set to be parallel, or almost parallel to the surface of the transparent substrate 31. Concretely, by applying voltage across the comb-shaped electrodes 32A and 32B, the electric field E in the lateral direction is generated in the light modulation layer 33. With the electric field E, the orientation of the optical axis AX1 of the microparticle 33B is made parallel, or almost parallel to the surface of the transparent substrate 31. In such a case, the refractive index difference in the oblique direction is made small. Consequently, high transparency to light propagating in the light guide plate 10 is obtained. As a result, in a dark state, leakage of light in the range where the view angle is large is reduced or almost eliminated. The luminance in a part in a partial light state is increased by the decreased light leakage amount. Therefore, in the embodiment, while reducing or almost eliminating leakage of light in the range where the view angle is large, display luminance is improved.

In the embodiment, for example, as illustrated in FIG. 7, the luminance in the transparent region 30A (luminance in black display) is lower than that in the case where the light modulation element 30 is not provided (the alternate long and short dash line in (B) in FIG. 7). On the other hand, the luminance in the scattering region 30B is much higher than that in the case where the light modulation element 30 is not provided (the alternate long and short dash line in (B) in FIG. 7). Moreover, the luminance in partial white display (luminance raise) increases by the decreased amount of luminance in the transparent region 30A.

The luminance raise is a technique of increasing luminance in the case where white display is performed partially as compared with the case where white display is performed in the entire screen. The technique is often generally used in a CRT, PDP, or the like. However, in a liquid crystal display, the backlight generates light uniformly regardless of an image, so that it is difficult to partially increase the luminance. In the case of using, as the backlight, an LED backlight in which a plurality of LEDs are two-dimensionally disposed, the LEDs may be partially turned off. In such a case, however, there is no diffusion light from a dark region in which the LEDs are turned off. Consequently, as compared with the case where all of the LEDs are turned on, the luminance becomes lower. By increasing current to be passed to the partial LEDs which are turned on, the luminance may be increased. In such a case, large current flows in very short time, so that there is an issue from the viewpoint of the load on the circuit and reliability.

On the other hand, in the embodiment, high transparency is obtained with respect to light propagating mainly in the oblique direction in the light guide plate 10, so that scattering in an oblique direction is suppressed, and leak light from the light guide plate 10 in the dark state is little. Since light is guided from an area in a partially dark state to an area in a partially light state, without increasing power supplied to the backlight 1, the luminance raise may be realized.

### Modifications of First Embodiment

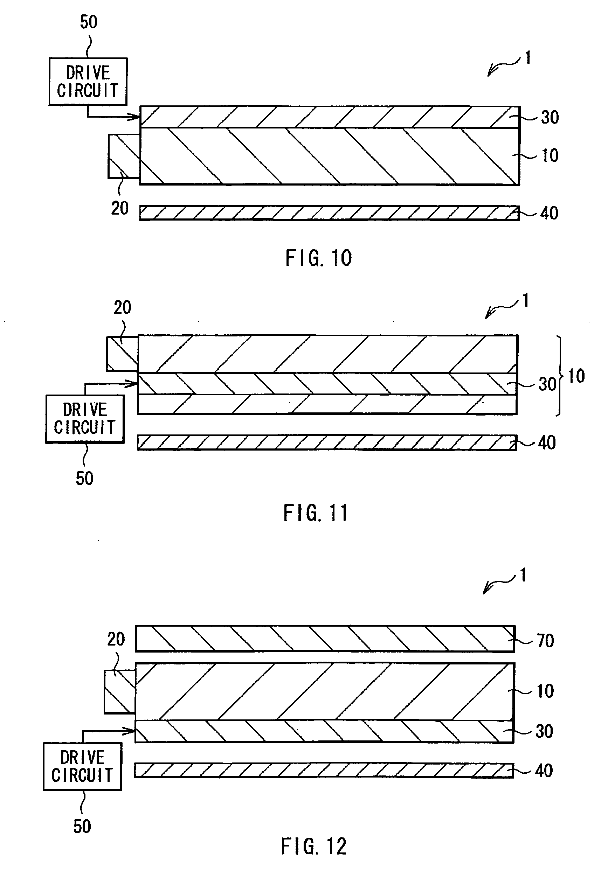

In the foregoing embodiment, the light modulation element 30 is closely joined to the back (under face) of the light guide plate 10 without an air layer. The light modulation element 30 may be closely joined to, for example, as illustrated in FIG. 10, the top face of the light guide plate 10 without an air layer. The light modulation element 30 may be provided inside of the light guide plate 10, for example, as illustrated in FIG. 11. In this case as well, the light modulation element 30 has to be closely joined to the light guide plate 10 without an air layer.

In the foregoing embodiment, nothing is provided over the light guide plate 10. For example, as illustrated in FIG. 12, an optical sheet 70 (such as a diffuser, a diffusion sheet, a lens film, a polarization separation sheet, or the like) may be provided over the light guide plate 10.

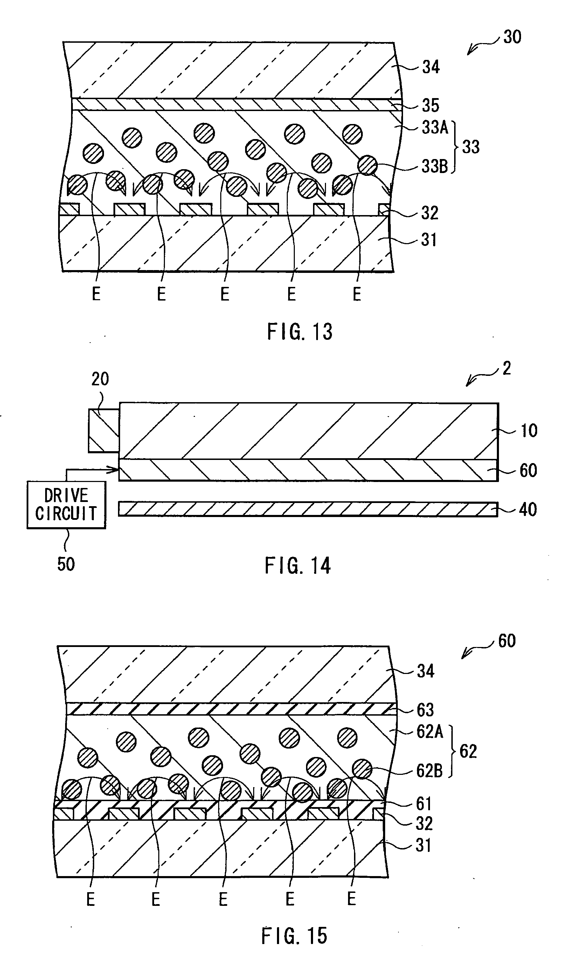

Although no electrode is provided on the surface of the transparent substrate 34 in the foregoing embodiment, an electrode may be provided. For example, as illustrated in FIG. 13, a top electrode 35 (third electrode) may be provided in a flat plate shape (entirely) in a region opposed to a region including the bottom electrode 32, on the surface of the light modulation layer 33 side of the transparent substrate 34. In such a case, for example, by applying a voltage (high voltage) having the same magnitude as that on the high voltage side of the comb-shaped electrodes 32A and 32B to the top electrode 35, a component in the lateral direction of the electric field E generated in the light modulation layer 33 becomes larger than that in the case where the top electrode 35 is not provided.

### Second Embodiment

FIG. 14 illustrates an example of a sectional configuration of a backlight 2 (illuminating device) according to a second embodiment of the present invention. FIG. 15 illustrates an example of a sectional configuration of a light modulation element 60 (which will be described later) provided in the backlight 2 of FIG. 14. FIGs. 14 and 15 are schematic diagrams, and dimensions and shapes in the diagrams are not always the same as actual ones.

The backlight 2 illustrates, for example, a liquid crystal display panel or the like from the back like the backlight 1 of the first embodiment and the modification of the first embodiment. The backlight 2 differs from the backlight 1 with respect to the point that the light modulation element 60 is provided in place of the light modulation element 30. In the following, points different from the foregoing embodiment and its modifications will be mainly described, and description on points common to the foregoing embodiment and its modifications will not be repeated.

In the light modulation element 60, for example, as illustrated in FIG. 15, the transparent substrate 31, the bottom electrode 32, an alignment film 61, a light modulation layer 62, an alignment film 63, and the transparent substrate 34 are disposed in order from the reflector 40 side.

The alignment films 61 and 63 are provided to align, for example, liquid crystals or monomers used for the light modulation layer 62. As kinds of the alignment films, for example, there are a vertical alignment film and a horizontal alignment film. Preferably, vertical alignment films are used as the alignment films 61 and 63. For the vertical alignment film, a silane coupling material, polyvinyl alcohol (PVA), a polyimide-based material, a surface-activating agent, or the like may be used. For those materials, it is unnecessary to perform rubbing process at the time of forming the alignment film. The materials are excellent because they are free from dust and static electricity. In the case of using plastic films as the transparent substrates 31 and 34, in the manufacturing process, preferably, the firing temperature after applying the alignment films 61 and 63 on the surface of the transparent substrates 31 and 34, respectively is as low as possible. Consequently, it is preferable to use a silane coupling material for which an alcohol-based solvent is able to be used as the alignment films 61 and 63.

It is sufficient for each of the vertical and horizontal alignment films to have the function of orientating liquid crystals and monomers, and reliability obtained by repetitive application of voltage demanded by a normal liquid crystal display or the like is unnecessary. The reliability by voltage application after formation of the device is determined by the interface between a film on which monomer is polymerized and the liquid crystal. Even when no alignment film is used, for example, by providing also the surface on the transparent substrate 34 side with an electrode and applying electric field or magnetic field across the bottom electrode 32 and the electrode on the transparent substrate 34 side, the liquid crystal or monomers used for the light modulation layer 62 may be aligned. That is, while applying the electric field or magnetic field across the bottom electrode 32 and the electrode on the transparent substrate 34 side, the orientation state of the liquid crystals or monomers in a state where voltage is applied is fixed by ultraviolet irradiation. In the case of using a voltage for forming the alignment films, an electrode for alignment and an electrode for driving are separately formed, or a dual-frequency liquid crystal in which the sign of dielectric-constant anisotropy is inverted according to the frequency or the like may be used as the material of the liquid crystal. In the case of using a magnetic field for formation of the alignment film, it is preferable to use a material having high magnetic susceptibility anisotropy, for example, a material having many benzene rings as the material of the alignment film.

The light modulation layer 62 is, for example, as illustrated in FIG. 15, a composite layer including a bulk 62A (second region) and a plurality of microparticles 62B (first region) spread in the bulk 62A. Both the bulk 62A and the microparticles 62B have optical anisotropy.

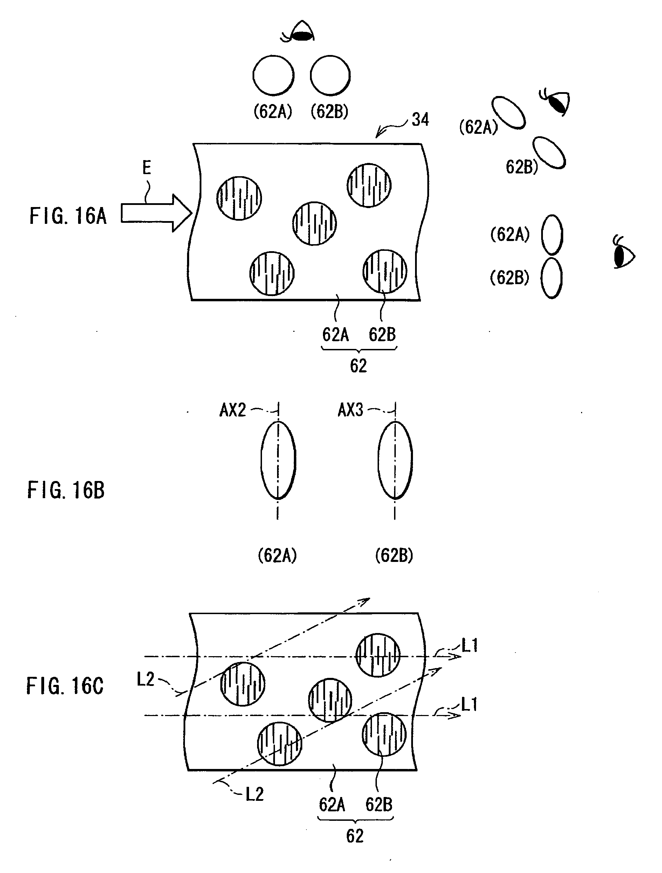

FIG. 16A schematically illustrates an example of an orientation state in the microparticle 62B when no voltage is applied across the comb-shaped electrodes 32A and 32B. In FIG. 16A, the orientation state in the bulk 62A is not illustrated. FIG. 16B illustrates an example of refractive index ellipsoidal bodies exhibiting the refractive index anisotropy of the bulk 62A and the microparticle 62B when no voltage is applied across the comb-shaped electrodes 32A and 32B. FIG. 16C schematically illustrates an example of a state where light L1 traveling in the lateral direction and light L2 traveling in an oblique direction passes through the light modulation layer 62 when no voltage is applied across the comb-shaped electrodes 32A and 32B.

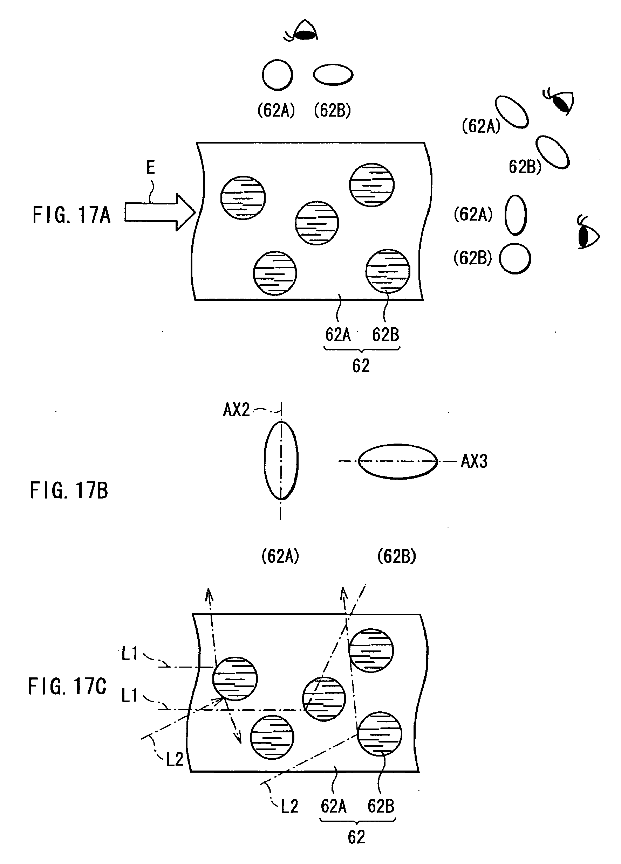

FIG. 17A schematically illustrates an example of an orientation state in the microparticle 62B when a predetermined voltage is applied across the comb-shaped electrodes 32A and 32B. In FIG. 17A, the orientation state in the bulk 62A is not illustrated. FIG. 17B illustrates an example of refractive index ellipsoidal bodies expressing the refractive index anisotropy of the bulk 62A and the microparticle 62B when a voltage is applied across the comb-shaped electrodes 32A and 32B. FIG. 17C schematically illustrates an example of a state where the light L1 traveling in the lateral direction and the light L2 traveling in an oblique direction is scattered in the light modulation layer 62 when a voltage is applied across the comb-shaped electrodes 32A and 32B.

The bulk 62A and the microparticle 62B have, for example, as illustrated in FIGs. 16A and 16B, a structure such that when no voltage is applied across the comb-shaped electrodes 32A and 32B, the orientation of an optical axis AX2 of the bulk 62A and that of an optical axis AX3 of the microparticle 62B coincide with each other (are parallel to each other). The orientations of the optical axes AX2 and AX3 do not need to coincide with each other but may be slightly deviated from each other due to a manufacturing error or the like.

For example, when no voltage is applied across the comb-shaped electrodes 32A and 32B, the optical axis AX3 of the microparticle 62B is orthogonal to the surfaces of the transparent substrates 31 and 34. On the other hand, for example, as illustrated in FIGs. 16A and 16B and FIGs. 17A and 17B, regardless of the presence/absence of application of a voltage across the comb-shaped electrodes 32A and 32B, the optical axis AX2 of the bulk 62A is orthogonal to the surfaces of the transparent substrates 31 and 34. The optical axis AX2 does not need to be orthogonal to the surfaces of the transparent substrates 31 and 34 but may cross the surfaces of the transparent substrates 31 and 34 at an angle other than 90 degrees due to a manufacturing error or the like. The optical axis AX3 does not need be orthogonal to the surfaces of the transparent substrates 31 and 34 but may cross the surfaces of the transparent substrates 31 and 34 at an angle other than 90 degrees due to a manufacturing error or the like.

Preferably, the ordinary light refractive index of the bulk 62A and that of the microparticle 62B are equal to each other, and the extraordinary light refractive index of the bulk 62A and that of the microparticle 62B are equal to each other. In this case, for example, when no voltage is applied across the comb-shaped electrodes 32A and 32B, as illustrated in FIG. 16A, there is hardly any refractive index difference in all of directions including the front direction and oblique direction, and high transparency is obtained. Consequently, for example, as illustrated in FIG. 16C, the light L1 traveling in the lateral direction and the light L2 traveling in the oblique direction passes through the light modulation layer 62 without being scattered in the light modulation layer 62. As a result, for example, in a manner similar to the case illustrated in FIG. 7 in the foregoing embodiment, light L from the light source 20 (light from the oblique direction) is totally reflected by the interface of the transparent region 30A (the interface between the transparent substrate 31 or the light guide plate 10 and air). The luminance of the transparent region 30A (luminance in black display) becomes lower than that in the case where the light modulation element 60 is not provided (the alternate long and short dash line in (B) in FIG. 7).

For example, the bulk 62A and the microparticle 62B have a structure such that, when a voltage is applied across the comb-shaped electrodes 32A and 32B, the orientation of the optical axis AX2 of the bulk 62A and that of the optical axis AX3 of the microparticle 62B are different from each other (orthogonal to each other) as illustrated in FIG. 17B. The microparticle 62B has, for example, a structure such that, when a voltage is applied across the comb-shaped electrodes 32A and 32B, the optical axis AX3 of the microparticle 62B crosses the surfaces of the transparent substrates 31 and 34 at an angle other than 90 degrees or is parallel to the surfaces of the transparent substrates 31 and 34. Therefore, when a voltage is applied across the comb-shaped electrodes 32A and 32B, in the light modulation layer 62, the refractive index difference increases in all of directions including the front direction and oblique direction, and high scattering is obtained. Consequently, for example, as illustrated in FIG. 17C, the light L1 traveling in the lateral direction and the light L2 traveling in the oblique direction is scattered in the light modulation layer 62. As a result, for example, in a manner similar to the case illustrated in FIG. 7 in the embodiment, the light L from the light source 20 (light from the oblique direction) passes through the interface of the scattering region 30B (the interface between the transparent substrate 31 or the light guide plate 10 and air), and light passed to the reflector 40 side is reflected by the reflector 40 and passes through the light modulation element 60. Therefore, the luminance of the scattering region 30B becomes extremely higher than that in the case where the light modulation layer 60 is not provided (the alternate long and short dash line in (B) in FIG. 7). Moreover, the luminance in the partial white display (luminance raise) increases by the decreased amount of the luminance in the transparent region 30A.

The ordinary light refractive index of the bulk 62A and that of the microparticle 62B may be slightly deviated from each other due to a manufacturing error or the like and is, preferably, 0.1 or less, more preferably, 0.05 or less. The extraordinary light refractive index of the bulk 62A and that of the microparticle 62B may be slightly deviated from each other due to a manufacturing error or the like and is, preferably, 0.1 or less, more preferably, 0.05 or less.

The refractive index difference (Δn = extraordinary light refractive index - ordinary light refractive index) of the bulk 62A and the refractive index difference (Δn = extraordinary light refractive index - ordinary light refractive index) of the microparticle 62B are preferred to be as large as possible, and are preferably 0.05 or larger, more preferably, 0.1 or larger, and further more preferably, 0.15 or larger for the following reason. In the case where the refractive index differences of the bulk 62A and the microparticle 62B are large, the scattering performance of the light modulation layer 62 becomes higher, light guiding conditions may be easily unsatisfied, and light from the light guide plate 10 is easily extracted.

The backlight 2 of the embodiment may be manufactured by a method similar to that of the backlight 1 of the foregoing embodiment.

The action and the effect of the backlight 2 of the embodiment will now be described.

In the backlight 2 of the embodiment, light from the light source 20 enters the light guide plate 10, is reflected by the top face of the light guide plate 10 and the under face of the transparent region 30A in the light modulation element 60, and propagates in the light guide plate 10 and the light modulation element 60 (refer to (A) in FIG. 7). The light propagating in the light guide plate 10 and the light modulation element 60 is scattered in the scattering region 30B in the light modulation element 60. The light passed through the under face of the scattering region 30B in the scattered light is reflected by the reflector 40, returned again to the light guide plate 10, and is emitted from the top face of the backlight 2. The light toward the top face of the scattering region 30B in the scattered light passes through the light guide plate 10 and is emitted from the top face of the backlight 2. As described above, in the embodiment, light from the top face of the transparent region 30A is hardly emitted, but light is emitted from the top face of the scatter region 30B. In such a manner, the modulation ratio in the front direction increases.

In the first embodiment and its modification, a composite layer formed by irradiating the mixture of the liquid crystal material and the isotropic low-molecular material with ultraviolet light, thereby causing phase separation is used as the light modulation layer 33. Since the liquid crystal material in the light modulation layer 33 is oriented in the electric field direction when voltage is applied, in the case where the ordinary light refractive index of the liquid crystal material and the refractive index of the high-polymer material are equal to each other, high transparency is exhibited in the lateral direction and the oblique direction. However, in the front direction, the difference between the extraordinary light refractive index of the liquid crystal material and the refractive index of the high-polymer material exists to some degree. Consequently, even if transparency is exhibited in the lateral and oblique directions, scattering appears in the front direction.

On the other hand, in the embodiment, both of the bulk 62A and the microparticle 62B contain mainly optical anisotropic materials and exhibit optical anisotropy regardless of the presence/absence of application of a voltage to the electrode. Consequently, by the electric field control, the orientation of an optical axes AX2 and AX3 of the bulk 62A and the microparticle 62B are made coincide with each other or different from each other. For example, by making the ordinary light refractive indices of them close to each other, by making also the extraordinary light refractive indices of them close to each other, and by making the orientations of the optical axes AX2 and AX3 of the bulk 62A and the microparticle 62B coincide with each other, the refractive index difference in all of the directions including not only the lateral and oblique directions but also the front direction is reduced. Therefore, in this case, extremely high transparence is obtained with respect to light propagating in the light guide plate 10. For example, when the ordinary light refractive indices of them are made equal to each other, the extraordinary light refractive indices of them are also made equal to each other, and the orientations of the optical axes AX2 and AX3 of the bulk 62A and the microparticle 62B are made coincide with each other, the refractive index difference in all of the directions is almost eliminated. Therefore, in this case, highest transparency is obtained with respect to light propagating in the light guide plate 10. As a result, in a dark state, leakage of light in the range where the view angle is large is reduced or almost eliminated. The luminance in an area in a partial light state may be increased by the decreased light leakage amount. Therefore, in the embodiment, while reducing or almost eliminating leakage of light in the range where the view angle is large, display luminance may be improved.

### Modifications of Second Embodiment

In the second embodiment, the light modulation element 60 is closely joined to the back (under face) of the light guide plate 10 without an air layer. Like the light modulation element 30 of the first embodiment, the light modulation element 60 may be closely joined to the top face of the light guide plate 10 without an air layer or may be provided inside of the light guide plate 10, for example, as illustrated in FIG. 11. In this case as well, the light modulation element 60 has to be closely joined to the light guide plate 10 without an air layer.

In the second embodiment, nothing is provided over the light guide plate 10. In a manner similar to the first embodiment, the optical sheet 70 (such as a diffuser, a diffusion sheet, a lens film, a polarization separation sheet, or the like) may be provided over the light guide plate 10.

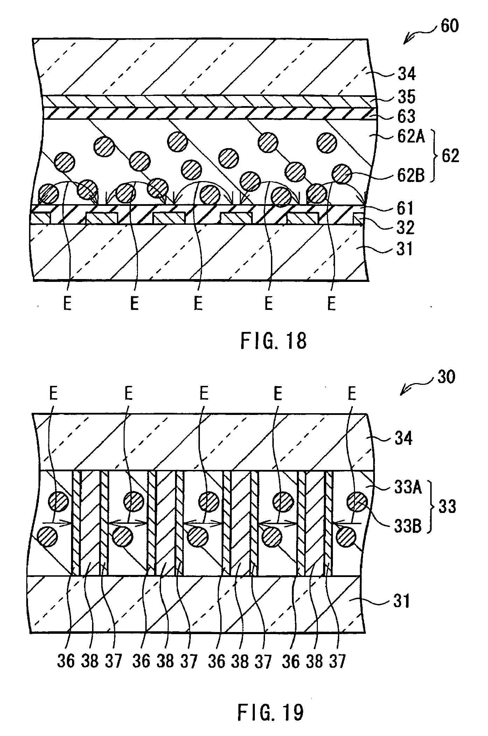

Although no electrode is provided on the surface of the transparent substrate 34 in the second embodiment, an electrode may be provided. For example, as illustrated in FIG. 18, the top electrode 35 (third electrode) may be provided in a flat state (entirely) in a region opposed to a region including the bottom electrode 32 between the surface of the light modulation layer 62 side of the transparent substrate 34 and the alignment film 63. In such a case, for example, by applying a voltage (high voltage) having the same magnitude as that on the high voltage side of the comb-shaped electrodes 32A and 32B to the top electrode 35, a component in the lateral direction of the electric field E generated in the light modulation layer 62 becomes larger than that in the case where the top electrode 35 is not provided.

### Modifications of Foregoing Embodiments

Although the bottom electrode 32 includes the comb-shaped electrodes 32A and 32B in each of the foregoing embodiments, another structure capable of generating an electric field in a direction parallel to the surface of the transparent substrate 31 may be employed. For example, as illustrated in FIG. 19, electrodes 36 and 37 which are insulated from each other may be provided on the side faces of a columnar spacer 38 provided between the transparent substrates 31 and 34. In this case, by applying a voltage across the electrodes 36 and 37, an electric field E in the lateral direction is generated.

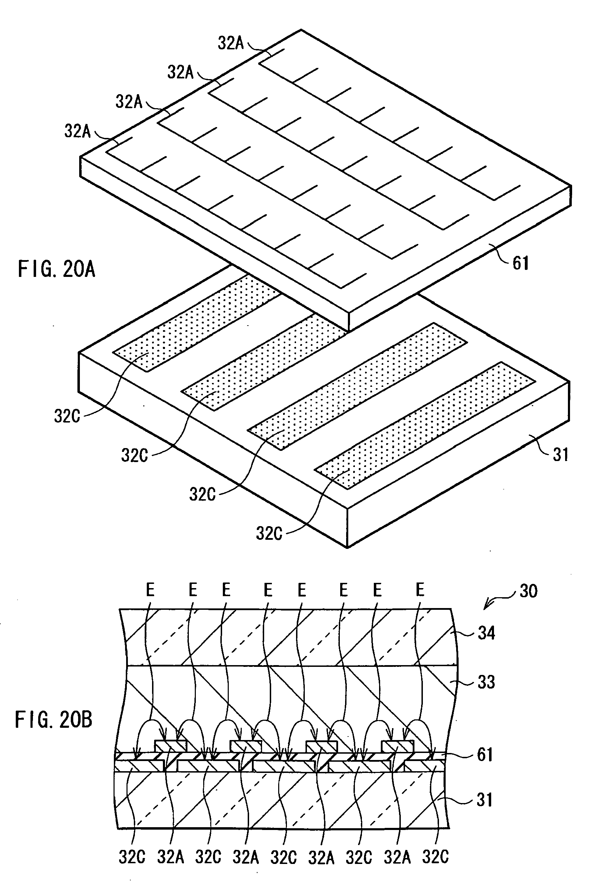

For example, as illustrated in FIGs. 20A and 20B, the comb-shaped electrodes 32B are eliminated. Instead, a plurality of band-shaped electrodes 32C (fifth electrodes) may be provided on the side opposite to the light modulation layer 33 by the relationship with the comb-shaped electrodes 32A. FIG. 20A schematically illustrates the positional relation between the comb-shaped electrodes 32A and the band-shaped electrodes 32C. FIG. 20B illustrates an example of the sectional configuration of the light modulation element 30 of the modification. The plurality of band-shaped electrodes 32C are formed so as to extend in the direction parallel to the extension direction of the comb teeth of the comb-shaped electrodes 32A (fourth electrode) and are disposed in parallel with predetermined gaps in the direction crossing (orthogonal to) the extension direction of the band-shaped electrodes 32C. The band-shaped electrodes 32C are provided on the surface of the transparent substrate 31, disposed on the side opposite to the light modulation layer 33 by the relationship with the comb-shaped electrodes 32A, and disposed so as to oppose the comb-shaped electrodes 32A via the insulating film (an alignment film 61) (with a predetermined gap). With the configuration, the comb-shaped electrode 32A and the band-shaped electrode 32C generate an electric field in a direction parallel to the surface of the transparent substrate 31, and the electric field E generated by the bottom electrode 32 contains a component parallel to the optical axis of the light source 20. In the modification, the comb-shaped electrode 32A and the band-shaped electrode 32C may be simple-matrix-driven, so that the light modulation element 30 may be partly driven pixel by pixel.

In the case where it is unnecessary to partly drive the light modulation element 30 pixel by pixel, in place of the band-shaped electrodes 32C, although not illustrated, a flat-plate-shaped electrode (fifth electrode) may be provided on the side opposite to the light modulation layer 33 in the relation with the comb-shaped electrode 32A. As described above, in the case such that the band-shaped electrode 32C is provided or a flat-plate-shaped electrode is provided in place of the band-shaped electrode 32C, the top electrode 35 may be provided on the transparent substrate 34 side.

### Application Example

An application example of the backlight 1 or 2 of the embodiments will now be described.

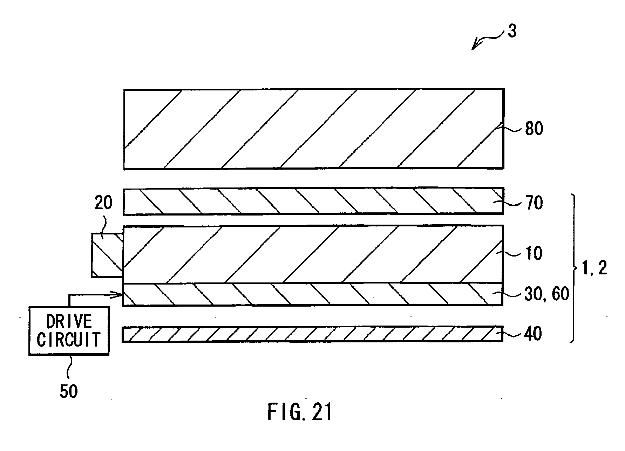

FIG. 21 illustrates an example of a schematic configuration of a display device 3 related to the application example. The display device 3 has a liquid crystal display panel 80 (display panel) and the backlight 1 or 2 disposed at the back of the liquid crystal display panel 80.

The liquid crystal display panel 80 is provided to display a video image. The liquid crystal display panel 80 is, for example, a transmissive liquid crystal display in which pixels are driven in accordance with a video signal. The liquid crystal display panel 80 has a structure in which a liquid crystal layer is sandwiched by a pair of transparent substrates. Concretely, the liquid crystal display panel 80 has, in order from the backlight 1 side, a polarizer, a transparent substrate, a pixel electrode, an alignment film, a liquid crystal layer, an alignment film, a common electrode, a color filter, a transparent substrate, and a polarizer.

The transparent substrate is a substrate transparent to visible light, for example, a plate glass. In the transparent substrate on the backlight 1 side, although not illustrated, active drive circuits including TFTs (Thin Film Transistors) electrically connected to pixel electrodes, wirings, and the like are formed. The pixel electrodes and common electrodes are made of, for example, ITO. The pixel electrodes are disposed in lattice or delta on the transparent substrate and function as electrodes of respective pixels. On the other hand, the common electrodes are formed on the entire surface of a color filter and function as common electrodes facing the pixel electrodes. The alignment film is made of a high polymer material such as polyimide and performs an alignment process on the liquid crystal. The liquid crystal layer is made of, for example, liquid crystal in a VA (Vertical Alignment) mode, a TN (Twisted Nematic) mode, or an STN (Super Twisted Nematic) mode and has the function of changing the orientation of the polarizing axis of light emitted from the backlight 1 by application voltage from a drive circuit (not illustrated). By changing the arrangement of the liquid crystal in multiple stages, the orientation of the transmission axis of each pixel is adjusted in multiple stages. In the color filter, color filters for separating light passed through the liquid crystal layer to, for example, three primary colors of red (R), green (G), and blue (B) or four colors of R, G, B, and white (W) are arranged in correspondence with the array of the pixel electrodes. The filter array (pixel array) includes, generally, a stripe array, a diagonal array, a delta array, and a rectangle array.

The polarizer is a kind of an optical shutter and transmits only light in a certain vibration direction (polarized light). The polarizer may be a polarizing element of an absorption type that absorbs light in a vibration direction (polarized light) other than the transmission axis but is preferably a polarizing element of a reflection type that reflects the light to the backlight 1 or 2 side from the viewpoint of improving luminance. The polarizers are disposed so that their polarization axes are different by 90 degrees. With the arrangement, light emitted from the backlight 1 or 2 passes through the liquid crystal or is interrupted.

In the application example, since the backlight 1 or 2 of the foregoing embodiments is used as the light source for illuminating the liquid crystal display panel 80, while uniformizing the in-plane luminance, the modulation ratio is increased. Without increasing power supplied to the backlight 1 or 2, luminance raise is realized. In the application example, in addition to the above-described effects, further, while reducing or almost eliminating leakage of light in the range where the angle of view is large, display luminance is improved. As a result, the modulation ratio in the front direction is further increased.

In the application example, the backlight 1 or 2 modulates the intensity of light partially entering the liquid crystal display panel 80 in accordance with a display image. However, in such a case, if there is a sharp luminance change in a pattern edge part in the electrodes included in the light modulation element 30 or 60, the border part of the change is seen also in the display image. Therefore, a characteristic that brightness monotonously changes in the electrode border part as much as possible is demanded. Such a characteristic is called a feathering characteristic. To increase the feathering characteristic, it is effective to use a diffuser having high diffusivity. However, when the diffusivity is high, the total light transmittance becomes low, and there is a tendency that brightness decreases. Therefore, in the application example, in the case of using the diffuser as the optical sheet 70, total light transmittance of the diffuser is preferably 50% to 85% both inclusive and, more preferably, 60% to 80% both inclusive. The longer the space distance between the light guide plate 10 and the diffuser in the backlight 1 or 2 is, the better the feathering characteristic becomes. It is also possible to increase the number of patterns of the electrodes included in the light modulation element 30 or 60 and adjust the voltage of each of the electrodes so that the state changes monotonously as much as possible between the dark state and the light state.

The present application contains subject matter related to that disclosed in Japanese Priority Patent Application JP 2009-000307 filed in the Japanese Patent Office on January 5, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An illuminating device comprising:
a light guide plate;
a light source disposed on a side face of the light guide plate; and
a light modulation element disposed on the surface or on the inside of the light guide plate and joined to the light guide plate,
wherein the light modulation element has
a pair of transparent substrates disposed apart from each other and opposed to each other,
an electrode capable of generating an electric field in a direction parallel to the surface of the transparent substrates, and
a light modulation layer provided in a gap between the pair of transparent substrates, and including a first region and a second region whose response speeds to the electric field are different from each other, and at least one of the first region and the second region has optical anisotropy.

2. The illuminating device according to claim 1, wherein the electrode is constructed so that an electric field generated by the electrode includes a component parallel to an optical axis of the light source.

3. The illuminating device according to any one of claims 1 to 2, wherein the electrode comprises:
a first electrode having comb teeth extending in a direction crossing the optical axis of the light source; and
a second electrode having comb teeth disposed alternately with the comb teeth of the first electrode.

4. The illuminating device according to any one of claims 1 to 2, wherein the electrode comprises a first electrode and a second electrode on the surface of one of the transparent substrates, and comprises a third electrode on the surface of the other transparent substrate,
the first electrode has comb teeth extending in a direction crossing the optical axis of the light source,
the second electrode has comb teeth disposed alternately with the comb teeth of the first electrode, and
the third electrode is formed in a flat plate shape in a region opposed to a region including the first electrode.

5. The illuminating device according to any one of claims 1 to 2, wherein the electrode comprises:
a fourth electrode having comb teeth extending in a direction crossing the optical axis of the light source; and
a fifth electrode disposed on the side opposite to the light modulation layer in the relation with the fourth electrode, and disposed so as to be opposed to the fourth electrode via a predetermined gap.

6. The illuminating device according to any one of claims 1 to 2, wherein the electrode comprises a fourth electrode and a fifth electrode on the surface of one of the transparent substrates, and comprises a sixth electrode on the surface of the other transparent substrate,
the fourth electrode has comb teeth extending in a direction crossing the optical axis of the light source,
the fifth electrode is disposed on the side opposite to the light modulation layer in the relation with the fourth electrode and disposed so as to be opposed to the fourth electrode via a predetermined gap, and
the sixth electrode is formed in a region opposed to a region including the fourth electrode.

7. The illuminating device according to any one of claims 1 to 6, wherein the first region exhibits optical anisotropy when voltage is applied to the electrode and exhibits optical isotropy when no voltage is applied to the electrode,
the second region exhibits optical isotropy regardless of the presence/absence of application of voltage to the electrode, and
the light modulation layer exhibits transparency to light from the light source when voltage is applied to the electrode, and exhibits scattering to light from the light source when no voltage is applied to the electrode.

8. The illuminating device according to any one of claims 1 to 6, wherein both of the first and second regions exhibit optical anisotropy regardless of the presence/absence of application of voltage to the electrode, and
the light modulation layer exhibits scattering to light from the light source when voltage is applied to the electrode, and exhibits transparency to light from the light source when no voltage is applied.

9. The illuminating device according to claim 8, wherein the first and second regions have a structure such that optical axes of the first and second regions are parallel to each other when no voltage is applied to the electrode and the optical axes of the first and second regions cross each other when voltage is applied to the electrode.

10. An illuminating device comprising:
a light guide plate;
a light source disposed on a side face of the light guide plate; and
a light modulation element disposed on the surface or on the inside of the light guide plate and joined to the light guide plate,
wherein the light modulation element has
a pair of transparent substrates disposed apart from each other and opposed to each other,
an electrode capable of generating an electric field in a direction parallel to the surface of the transparent substrates, and
a light modulation layer provided in a gap between the pair of transparent substrates, and including a plurality of regions whose response speeds to the electric field are different from each other and exhibiting scattering or transparency to light from the light source in correspondence with the presence/absence of application of voltage to the electrode.

11. A display device comprising:
a display panel having a plurality of pixels disposed in a matrix, the plurality of pixels being driven on the basis of an image signal; and
an illuminating device illuminating the display panel,
wherein the illuminating device has
a light guide plate,
a light source disposed on a side face of the light guide plate, and
a light modulation element disposed on the surface or on the inside of the light guide plate and joined to the light guide plate, and
the light modulation element has
a pair of transparent substrates disposed apart from each other and opposed to each other,
an electrode capable of generating an electric field in a direction parallel to the surface of the transparent substrates, and
a light modulation layer provided in a gap between the pair of transparent substrates, and including a first region and a second region whose response speeds to the electric field are different from each other, and at least one of the first region and the second region has optical anisotropy.
